# EUROPÄISCHE PATENTSCHRIFT

(11) **EP 0 545 030 B1**
(45) Veröffentlichungstag und Bekanntmachung des Hinweises auf die Patenterteilung: **18.09.1996**
(21) Anmeldenummer: 92117170.8
(22) Anmeldetag: 08.10.1992
(51) Int. Cl.: H04N 7/24

(54) **Verfahren zur Aufbereitung von Bildquellsignalen mit oder ohne Tonsignalen sowie Anwendung**
Method of processing picture source signals with or without sound signal and use of the method
Méthode de préparation de signaux de sources d'image avec ou sans signaux de son et utilisation correspondante

(30) Priorität: 02.11.1991 DE 4136112
(43) Veröffentlichungstag der Anmeldung: 09.06.1993
(73) Patentinhaber: ROBERT BOSCH GMBH, 70442 Stuttgart (DE)
(72) Erfinder: Grotz, Karlheinz, Dipl.-Ing. (FH), W-7012 Fellbach (DE); Krull, Klaus, Dipl.-Ing. (FH), W-7153 Weissach i.T. (DE); Süssmeier, Georg, Dipl.-Ing., W-7150 Backnang (DE)

(56) Entgegenhaltungen:
- EP-A- 0 324 954
- EP-A- 0 446 613
- DE-A- 4 008 201

## Beschreibung

Die Erfindung geht aus von einem Verfahren gemäß dem Oberbegriff des Patentanspruchs 1. Ein solches Verfahren ist bekannt aus DE 40 08 201 A1.

Bei einer Ausgestaltung des Verfahrens gemäß DE 40 08 201 A1 werden aufzubereitende Bildquellsignale einzeln mittels A/D-Wandlern digitalisiert und jeweils digital in verschiedene Frequenzbereiche umgesetzt, wobei die Umsetzung so vorgenommen wird, daß sich zumindest die Nutzungssignalanteile frequenzmäßig nicht überlappen. Die so umgesetzten Bildquellsignale werden anschließend durch digitale Addition zu einem Frequenzmultiplexsignal zusammengeführt, welches übertragen wird. Empfangsseitig wird das Frequenzmultiplexsignal vorzugsweise mit nur einem D/A-Wandler rückgewandelt.

Aufgabe der Erfindung ist es, bei geringem Aufwand eine qualitativ hochwertige Signalübertragung zu ermöglichen. Diese Aufgabe wird durch die Schritte des Anspruchs 1 gelöst. Die weiteren Ansprüche zeigen Weiterbildungen bzw. eine Anwendung des Verfahrens auf.

Die Erfindung beruht auf folgenden Erkenntnissen:

Durch die Maßnahmen gemäß der Erfindung werden die Bildquellsignale (z. B. FBAS Signale mit Tonträgern) direkt A/D-gewandelt und danach digital moduliert. Bekanntlich haben A/D-Wandler umso bessere Eigenschaften je tiefer die Eingangssignalfrequenzen sind. Diese Tatsache macht sich die Erfindung vorteilhaft zunutze. Durch die sich anschließende digitale Modulation wird eine hohe Qualität der Bildsignalaufbereitung erzielt, da diese digitale Modulation nahezu ideale Eigenschaften besitzt und keine Signalverfälschungen durch nichtlineare Kennlinien, wie bei analoger Modulation auftreten. Da bei der Erfindung direkt Quellbildsignale aufbereitet werden, fallen alle Probleme mit der Unterdrückung von Trägern weg.

Ein bei analoger Modulation/Demodulation zwangsläufig auftretender Qualitätsverlust wird vermieden. Nach der Übertragung können die Signale auf einfache Weise und ohne großen Qualitätsverlust kompatibel für besteherde Zubringer- und/ober Verteilnetze aufbereitet werden, so daß bestehende analoge oder digitale Übertragungs- und/oder Verteileinrichtungen, z.B. bestehende KTV-Netze, weiterverwendet werden können.

Aus DE 37 07 243 C2 ist es bekannt Fernseh- und Tonsignale digital für eine Zeitmultiplexübertragung aufzubereiten. Dort werden jedoch im Gegensatz zur erfindungsgemäßen Lösung Zwischenfrequenzsignale verarbeitet, die zuerst analog von der Zwischenfrequenzlage in Basisbandlage umgesetzt und erst anschließend digitalisiert werden. Diese Methode erfordert einen hohen Aufwand an analogen Komponenten, z.B. Filtern, die außerdem noch zu Qualitätseinbußen für die aufzubereitenden Signale führen können.

Im Gegensatz zum Verfahren gemäß DE 40 08 201 A1 werden die digital modulierten Signale nicht weiter umgesetzt, sondern direkt nach der digitalen Modulation im Zeitmultiplexverfahren übertragen.

Die Ausgestaltung nach Anspruch 2 hat den Vorteil, daß insbesondere bei Versorgung weniger Teilnehmer bestehende Übertragungseinrichtungen ohne Mehraufwand weiterbenutzt werden können. Auch ist diese Ausgestaltung flexibel bezüglich Weiterverarbeitung der Signale. Die Ausgestaltung gemäß Anspruch 3 läßt eine kostengünstige und qualitativ hochwertige Signalverteilung über LWL-Netze, insbesondere auch Ortsnetze zu. Da die Signale in hoher Qualität an den LWL-Endstellen zur Verfügung stehen, läßt sich der empfangsseitige Aufwand beträchtlich reduzieren. Einzelumsetzungen im Analogbereich entfallen. Die empfangsseitige D/A-Wandlung kann für mehrere Kanäle mit nur einem D/A-Wandler vorgenommen werden. Die erfindungsgemäße Signalaufbereitung ist auch für beliebige Fernsehnormen geeignet, insbesondere auch für die Frequenzraster der MAC- oder HDMAC-Signale. Der besondere Vorteil der erfindungsgemäßen Lösung ist die Einsatzmöglichkeit im gesamten Breitbandverteilnetz, d.h. von der Einspeisquelle bis zum Hauptübergabepunkt (HÜP) beim Teilnehmer, ohne daß das Konzept der Signalverarbeitung und die Systemkomponenten verändert werden müßten.

Beispiele für das erfindungsgemäße Verfahren bzw. dessen Anwendung werden nun anhand von Zeichnungen erläutert. Es zeigen:
Figur 1 das Prinzip der digitalen Modulation für 8 Bildquellsignale sowie der Übertragung und Verteilung ,
Figur 2 die Signalspektren vor und nach der digitalen Modulation,
Figur 3 das Prinzip der Übertragung und Verteilung,
Figur 4 einen Rahmenaufbau zur Übertragung eines TV-Signals,
Figur 5 ein Blockschaltbild für die Einzelkanalübertragung eines TV-Signals mit 139,264 Mbit/s und
Figur 6 verschiedene Kombinationen zur Signalaufbereitung.

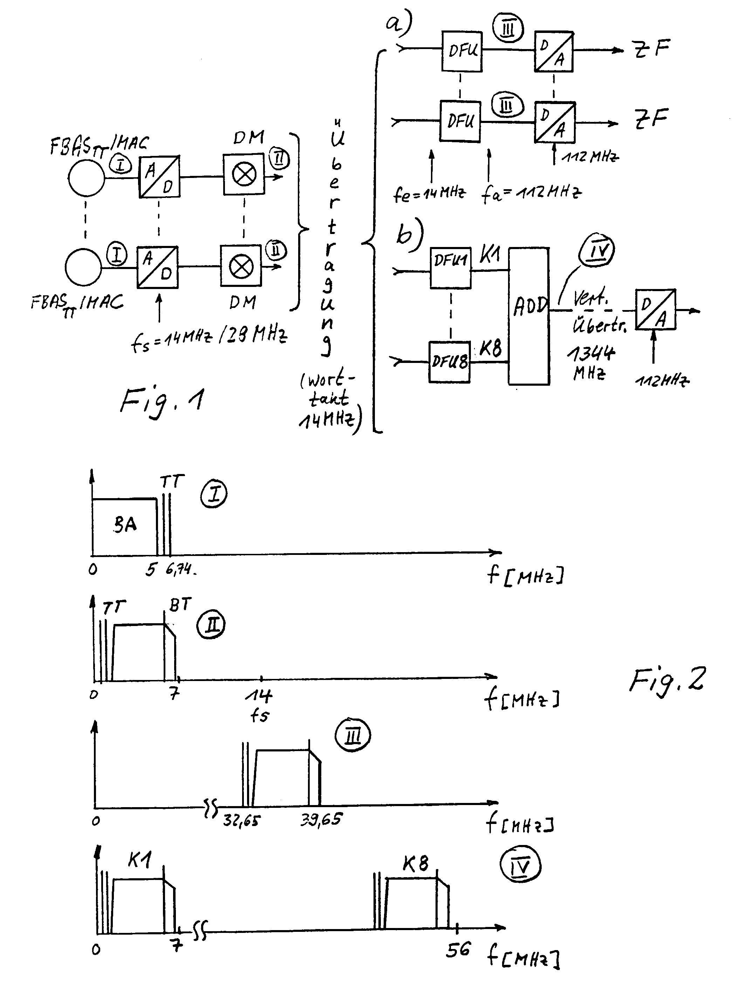

Die einzelnen Verfahrensschritte der Signalaufbereitung sind in Figur 1 am Beispiel von 8 Bildquellsignalen dargestellt. Die Bildquellsignale, die z.B. als FBAS Signale mit gegebenenfalls geträgerten Tönen (FBAS_{TT}) oder als Komponentensignale (MAG, HDMAC...) vorliegen, werden direkt mit einer Abtastfrequenz von fs = 14 MHz bei FBAS-Signalen bzw. 28 MHZ bei MAC oder HDMAC-Signalen mittels jeweils eines A/D-Wandlers digitalisiert. Es ist zu beachten, daß die Signalform des Bildquellsignals nicht verändert und in geschlossener Form digitalisiert wird. Am Ausgang jedes A/D-Wanders liegt also ein digitales Bildquellsignal vor. Jedes dieser Quellsignale mit ungeträgertem Bildanteil BA und Tonträgern TT, die etwas unterhalb von 6,74 MHz liegen (Figur 2, erste Zeile) wird nun durch einen digitalen Modulator DM digital moduliert. Dadurch wird die Frequenzlage invertiert und die Tonträger TT erscheinen nahe bei der Frequenz 0. Der Bildträger BT unterhalb von 7MHz kommt hinzu (Figur 2, zweite Zeile). Diese digital modulierten Bildsignale können nun ohne weitere Frequenzumsetzung direkt im Zeitmultiplexverfahren übertragen werden, mit einem Worttakt von 14 MHZ bei TV, bzw. 28 MHZ bei MAC und HDMAC.

Nach der Übertragung werden die Bildsignale digital einzeln in jeweils im gleichen Frequenzband - in Figur 1 als Alternative a) dargestellt - oder in ein jeweils anderes höheres Frequenzband - in Figur 1 als Alternative b) dargestellt - umgesetzt.

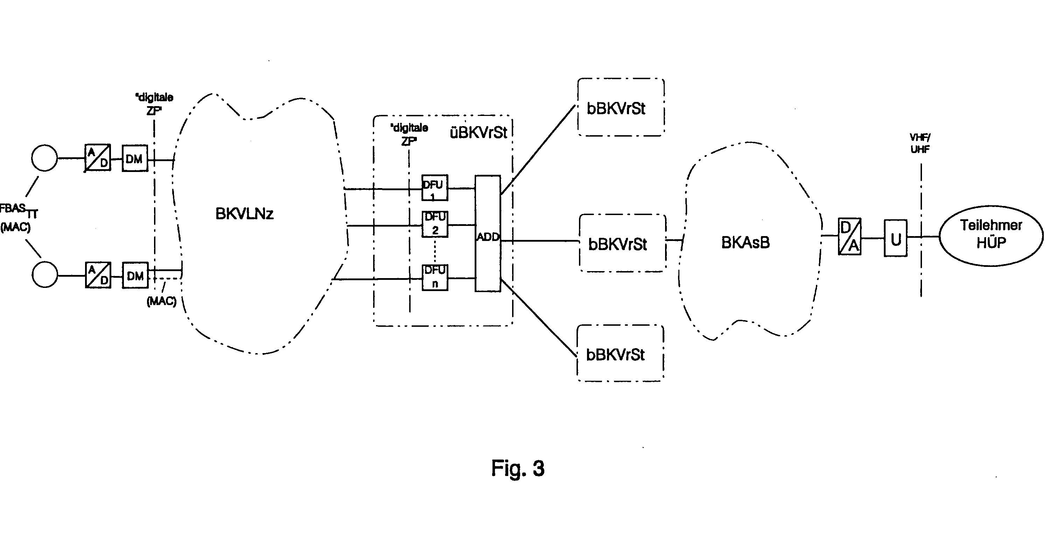

Die digital modulierten Bildsignale liegen an der Übertragungsschnittstelle "digitale ZF" (Figur 3) jeweils mit einer Bitrate von 126 Mbit/s (14 MHz x 9 bit), bei TV, bzw. 2 x 126 MBit/s bei MAC und HDAC an. Diese Signale können jeweils entweder in einen TV oder zwei MAC, HDMAC 139,264 Mbit/s-Rahmen der plesiochronen digitalen Hierarchie gemultiplext oder in einen oder zwei STM1- Rahmen der synchronen Hierarchie gemappt werden und in Übertragungseinrichtungen des BK-Verbindungsliniennetzes BKVLNz oder des Fernmeldenetzes (Breitbandverteilnetz), Richtfunk, Lichtwellenleiternetz) eingespeist werden.

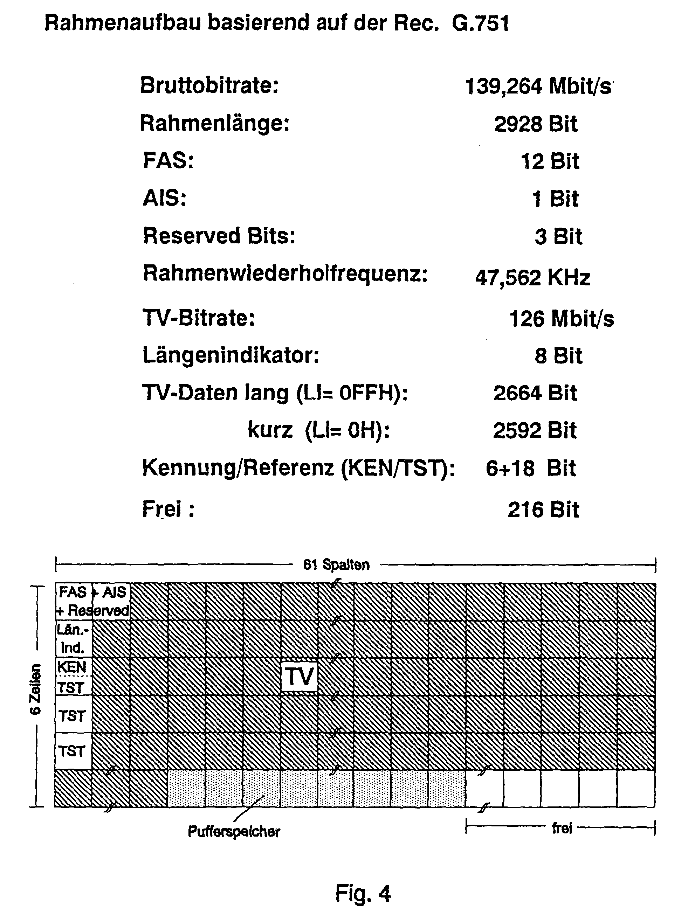

In Figur 4 ist ein möglicher Rahmenaufbau für die TV-Übertragung nach der CCITT Empfehlung G.751 gezeigt. Die 2928 Bits des Rahmens sind byteweise in 61 Spalten und 6 Zeilen angeordnet. Wegen der 9-bit-Struktur des TV-Signals und der 8-bit-Struktur des Rahmens ergeben sich zwei unterschiedliche Rahmenkonfigurationen. Das TV-Signal belegte im ersten Rahmen 333 Bytes und im zweiten Rahmen 324 Bytes. Mit Hilfe des Längenindikators LI kann auf der Empfangsseite die aktuelle Belegung des Rahmens festgestellt werden.

Die Signale KEN/TST dienen zur Synchronizierung der möglicherweise auf zwei verschiedenen Wegen übertragenen MAC und HDMAC -Signalen.

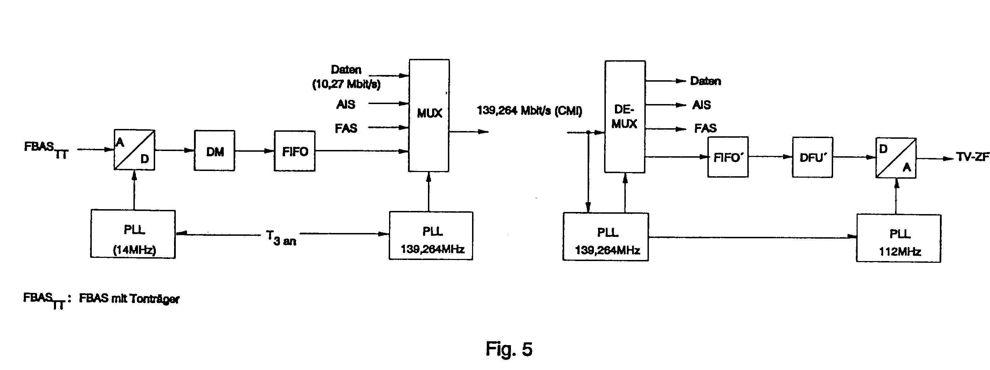

Figur 5 zeigt in einem Blockschaltbild die Baugruppe für eine TV-Kanal Einzelübertragung mit der Bitrate 139,264 Mbit/s. Das Ausgangssignal des digitalen Modulators DM mit der Bitrate von 126 Mbit/s wird über einen Pufferspeicher FIFO zum Multiplexer geführt. Der Füllstand des Pufferspeichers bestimmt, welche Rahmenkonfiguration für die Übertragung gewählt werden muß. Der Übertragungstakt für den Multiplexer wird von einem isochronen Takt z. B. T₃ₐₙ abgeleitet. Da von diesem Takt auch die Abtastfrequenz von 14 MHz für den A/D-Wandler abgeleitet wird, kann auf die üblichen Stopfverfahren verzichtet werden.

Die empfangsseitige Rahmensynchronisierung kann nach den bekannten Verfahren durchgeführt werden. Die Daten werden vom Demultiplexer in den Pufferspeicher FIFO' eingelesen und vom digitalen Frequenzumsetzer DFU' von der Basisbandlage in den digitalen ZF-Bereich von 112 Mbit/s umgesetzt. Bei der Einzelkanalübertragung werden alle Kanäle in diese gleiche digitale Zwischenfrequenzlage von 112 Mbit/s umgesetzt und nachfolgend mittels einem D/A-Wandler in Norm-ZF-Lage (32,85 - 39,85 MHz) umgesetzt.

Bei der Alternative a) werden die übertragenen Bildsignale jeweils mit gleichen digitalen Frequenzumsetzern DFU in eine digitale Zwischenfrequenzlage gebracht. Das Spektrum der Signale erscheint dann jeweils zwischen 32,65 und 39,65 MHz (Figur 2, dritte Zeile), wenn ein digitaler Frequenzumsetzer DFU eine Frequenzumsetzung um den Faktor 8 durchführt (fₑ = 14 MHz, fₐ = 112 MHz). Die Signale in digitaler Zwischenfrequenzlage werden nun mit D/A-Wandlern zu Norm - ZF Signalen aufbereitet für die Einzelverteilung und/oder Übertragung.

Bei der Alternative b) werden die übertragenen digital modulierten Bildsignale mittels verschiedener digitaler Frequenzumsetzer DFU1...DFU8 kanalweise digital in jeweils verschiedene Frequenzbereiche umgesetzt, wobei die Umsetzung so vorgenommen wird, daß sich zumindest die Nutzsignalanteile frequenzmäßig nicht überlappen. Praktisch wird so vorgegangen, daß jedes Kanalsignal in einen anderen, jedoch beliebig wählbaren 7 MHz-Frequenzschlitz des Frequenzbandes (Figur 2, vierte Zeile) umgesetzt wird, das am Ausgang der digitalen Frequenzumsetzer DFU1...DFU8 erscheint. Die 8 Kanalsignale werden dann durch digitale Addition, symbolisiert durch die Einheit ADD zu einem 8-kanaligen digitalen Frequenzmultiplexsignal zusammengefügt. Die Bandbreite am Addierausgang ist dann 56 MHz (8x7 MHz).

Dieses Band wird dann beim 8-kanaligen Systembeispiel mit einer Bitrate von 1 344 Mbit/s (einschließlich der Synchronisation) durch ein optisches Übertragungssystem zur Empfangsseite übertragen (Fig. 3). In einem System mit einer Übertragungsbitrate von ca. 2,7 Gbit/s können so bis zu 16 TV-Programme übertragen werden. Auf der Empfängerseite befinden sich außer der optischen Empfangseinheit vorzugsweise nur noch ein D/A-Wandler für das gesamte Frequenzmultiplexsignal, der dieses Frequenzmultiplexsignal zurückwandelt und ein breitbandiger HF-Umsetzer U, der die Kanalgruppe von 8 TV-Kanälen in den für den Teilnehmer gewünschten und empfangskompatiblen VHF-Bereich umsetzt.

Wie Figur 3 zeigt, können die Systemkomponenten im Netz so verteilt werden, daß sowohl eine Signalzuführung über das BK-Verbindungsliniennetz BKVLNz zur übergeordneten BK-Verstärkerstelle üBKVrSt als auch über eine Verteilung von der benutzerseitigen Verstärkerstelle bBKVrSt über das BK-Anschlußnetz BKAsB zum Teilnehmer-Hauptübergabepunkt HÜP möglich ist. Eine derartige Signalaufbereitung kann sich auch schon bei der Quelle befinden. Die digitalen Frequenzumsetzer DFU1...DFUn setzen dann die Signale, wie im Zusammenhang mit Figur 1 schon beschrieben, in den zur Verteilung gewünschten Frequenzschlitz um.

Die D/A-Wandler befinden sich in der Realisierung gemäß Figur 3 bei den Hauptübergabepunkten HÜP der Teilnehmer, wo anschließend eine gruppenweise Frequenzumsetzung aller Kanäle mit nur einem Frequenzumsetzer U (Figur 3) erfolgt. Die Teilnehmer erhalten dann jeweils eine Kanalgruppe in HF-Lage.

Nähere Einzelheiten zur hier benutzten digitalen Frequenzumsetzung bzw. digitalen Modulation finden sich in den deutschen Patentanmeldungen DE-A-40 41 634 und DE-A-40 26 477.

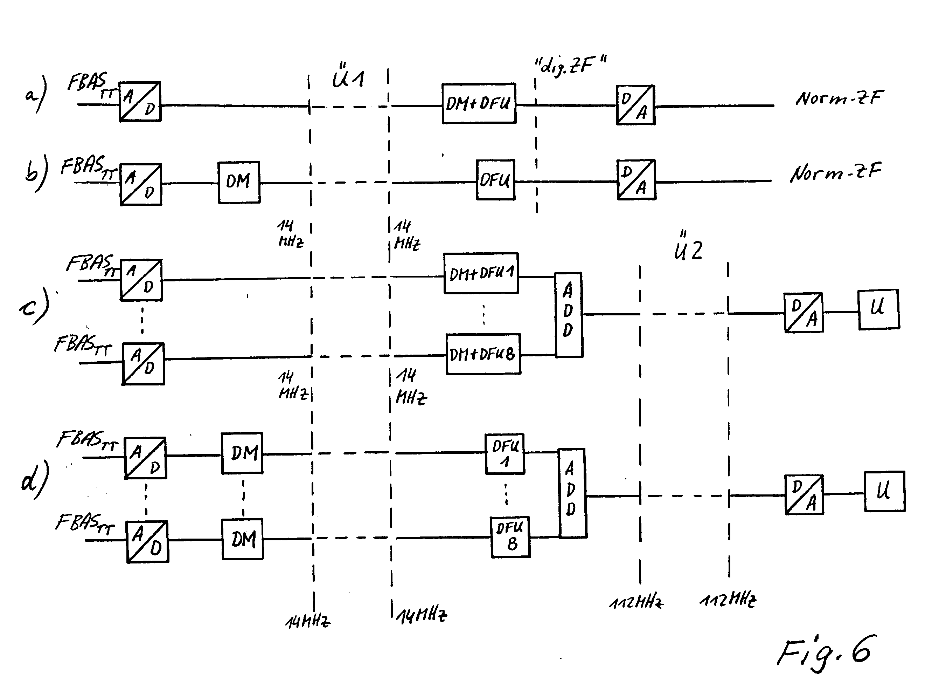

In Fig. 6 sind mögliche Kombinationen zur Signalaufbereitung dargestellt. Die varianten a) und c) stellen Signalaufbereitungs verfahren das, die aus dem Stand der Technik bekannt sind. Bei der Variante a) wird in einer Übertragungsebene Ül ein digitalisiertes FBAS-Signal mit Tonträgern TT übertragen. Die digitale Modulation (DM) und die digitale Frequenzumsetzung (DFU) zur Bildung des Schnittstellensignals "digitale ZF" erfolgt erst nach der Übertragung in einem Verfahrensschritt. Nach der D/A-Wandlung steht ein analoges Norm-ZF Signal beispielsweise zur Einspeisung in ein bestehendes analoges Übertragungs- und/oder Verteilnetz zur Verfügung. Im Gegensatz dazu wird bei der Variante b) das digitalisierte FBAS-Signal mit Tonträgern TT vor der Übertragung digital moduliert und nach der Übertragung digital in die Zwischenfrequenzlage umgesetzt. Bei den Varianten a) und b) stehen nach der D/A-Wandlung geträgerte Einzelkanäle zur Weiterverarbeitung bereit. Bei der Variante c) werden mehrere digitalisierte FBAS-Signale mit Tonträgern in der Übertragungsebene Ü1 übertragen und nach dieser Übertragung in jeweils einem Verfahrensschritt digital moduliert (DM) und in verschiedene Frequenzschlitze umgesetzt (DFU1...DFU8). Nach der Addition zu einem Frequenzmultiplexsignal erfolgt dessen Übertragung in der Übertragungsebene Ü2. Bei der Variante d) werden im Gegensatz zur Variante c) die digitalisierten FBAS-Signale mit Tonträgern TT vor der Übertragung digital moduliert (DM) und nach der Übertragung in der Übertragungsebene Ü1 in verschiedene Frequenzschlitze zur Bildung des Frequenzmultiplexsignals umgesetzt (vgl. Fig. 1 Variante b). Bei den Varianten c) und d) steht nach der D/A-Wandlung ein Gruppensignal aus z. B. 8 geträgerten Kanalsignalen zur Verfügung.

## Patentansprüche

1. Verfahren zur Aufbereitung von Bildquellsignalen, beispielsweise FBAS oder Komponentensignalen, mit oder ohne Tonsignalen für Übertragungszwecke und deren empfangsseitige Nachbearbeitung, mit folgenden Schritten:
a) die Bildquellsignale mit oder ohne Tonsignalen werden einzeln mittels A/D-Wandlern geschlossen digitalisiert,
b) die Bildquellsignale mit oder ohne Tonsignalen werden einzeln digital moduliert derart, daß das modulierte Bildsignal mit Tonanteilen nahe bei der Frequenz O erscheint wobei der Bildträgers am obesen Ende des digital modulierten Bildsignal liegt
c) die Bildquellsignale mit oder ohne Tonsignalen werden vor oder nach der digitalen Modulation einzeln oder gemeinsam ohne weitere Frequenzumsetzung im Zeitmultiplexverfahren übertragen,
d) im Anschluß an die Übertragung im Zeitmultiplexverfahren werden die Signale in ein Frequenzmultiplexsignal überführt, wobei die Signale zur Bildung dieses Frequenzmultiplexsignals digital einzeln in ein jeweils gleiches oder ein jeweils anderes höheres Frequenzband umgesetzt.

2. Verfahren nach Anspruch 1, dadurch gekennzeichnet, daß die digitale Umsetzung der im Zeitmultiplexverfahren übertragenen digital modulierten Signale in eine jeweils gleiche Zwischenfrequenzlage erfolgt.

3. Verfahren nach Anspruch 1, dadurch gekennzeichnet, daß die digitale Umsetzung der im Zeitmultiplexverfahren übertragenen digital modulierten Signale jeweils geschlossen in verschiedenen Frequenzbereiche erfolgt, wobei die Umsetzung so vorgenommen wird, daß sich die Nutzsignalanteile frequenzmäßig nicht überlappen, und daß die so umgesetzten Signale durch digitale Addition zu einem Frequenzmultiplexsignal zusammengefügt werden.

4. Verfahren nach Anspruch 3, dadurch gekennzeichnet, daß das Frequenzmultiplexsignal in ein Übertragungs- und/oder Verteilsystem eingespeist wird.

5. Verfahren nach Anspruch 3 oder 4, dadurch gekennzeichnet, daß das Frequenzmultiplexsignal nach der Übertragung und/oder Verteilung mit nur einem D/A-Wandler rückgewandelt wird.

6. Verfahren nach einem der Ansprüche 1 bis 5, dadurch gekennzeichnet, daß die digital modulierten Signale jeweils in einem Zeitmultiplexrahmen mit beispielsweise 139,264 Mbit/s der plesiochronen digitalen Hierarchie untergebracht werden.

7. Verfahren nach einem der Ansprüche 1 bis 5, dadurch gekennzeichnet, daß die digital modulierten Signale jeweils in einem Rahmen, beispielsweise im STM1-Rahmen, der synchronen digitalen Hierarchie untergebracht werden.

8. Verfahren nach Anspruch 2, dadurch gekennzeichnet, daß nach der digitalen Umsetzung eines übertragenen Bildsignals eine D/A-Wandlung vorgenommen wird, damit das Bildsignal zur Einspeisung in ein analoges Übertragungs- und/oder Verteilnetz geeignet ist.

9. Anwendung des Verfahrens nach einem der Ansprüche 1 bis 8 für die Signalübertragung in einem Kabelfernsehzubringer und/oder -verteilnetz.

## Claims

1. Method for conditioning video source signals, for example composite-video or component signals, with or without audio signals, for transmission purposes and their subsequent processing at the receiving end, having the following steps:
a) the video source signals with or without audio signals are digitized individually by means of A/D converters, in a self-contained manner,
b) the video source signals with or without audio signals are digitally modulated individually in such a manner that the modulated video signal with audio elements appears close to the frequency 0, the video carrier being located at the upper end of the digitally modulated video signal,
c) the video source signals with or without audio signals are transmitted before or after the digital modulation, individually or jointly, without any further frequency conversion using the time-division multiplex method,
d) after the transmission using the time-division multiplex method, the signals are converted into a frequency-division multiplex signal, these signals being digitally converted individually into a respectively identical frequency band or a respectively different higher frequency band in order to form this frequency-division multiplex signal.

2. Method according to Claim 1, characterized in that the digital conversion of the digitally modulated signals, which have been transmitted using the time-division multiplex method, is carried out to a respectively identical intermediate frequency.

3. Method according to Claim 1, characterized in that the digital conversion of the digitally modulated signals, which have been transmitted using the time-division multiplex method, in each case in a self-contained manner into different frequency ranges, the conversion being carried out such that the wanted signal elements do not overlap in terms of frequency, and in that the signals which have been converted in this way are joined together by digital addition to form a frequency-division multiplex signal.

4. Method according to Claim 3, characterized in that the frequency-division multiplex signal is fed to a transmission and/or distribution system.

5. Method according to Claim 3 or 4, characterized in that the frequency-division multiplex signal is converted back, after transmission and/or distribution, using only one D/A converter.

6. Method according to one of Claims 1 to 5, characterized in that the digitally modulated signals are in each case accommodated in a time-division multiplex frame at, for example, 139.264 Mbit/s in the plesiochronous digital hierarchy.

7. Method according to one of Claims 1 to 5, characterized in that the digitally modulated signals are in each case accommodated in a frame, for example in the STM1 frame, of the synchronous digital hierarchy.

8. Method according to Claim 2, characterized in that a D/A conversion is carried out after the digital conversion of a transmitted video signal, in order that the video signal is suitable for feeding to an analogue transmission and/or distribution network.

9. Use of the method according to one of Claims 1 to 8 for the signal transmission in a cable television feeder and/or distribution network.

## Revendications

1. Procédé de préparation de signaux de sources d'images, par exemple FBAS ou de signaux de composants, avec ou sans signaux de son, à des fins de transmission et pour leur post-traitement du côté de la réception, procédé comprenant les séquences suivantes :
a) les signaux de sources d'images, avec ou sans signaux de son, sont numérisés individuellement au moyen de convertisseurs analogiques/numériques de façon fermée,
b) les signaux de sources d'images avec ou sans signaux de son, sont modulés individuellement de façon numérique, d'une manière telle que le signal modulé d'image avec des fractions de son apparaisse au voisinage de la fréquence 0, la porteuse d'image se trouvant à l'extrémité supérieure du signal d'image modulé numériquement,
c) les signaux de sources d'images, avec ou sans signaux de son, sont transmis avant ou après la modulation numérique individuellement ou ensemble, sans autre transposition de fréquence, en accès à partage du temps,
d) à la suite de la transmission en accès à partage du temps, on transforme les signaux individuellement de façon numérique en un signal multiplex de fréquence, les signaux servant à la formation du signal multiplex de fréquence étant transposés dans une bande de fréquence respectivement identique ou une autre bande de fréquence plus élevée.

2. Procédé selon la revendication 1,
caractérisé en ce que
la transposition numérique des signaux modulés transmis numériquement en accès par partage du temps a lieu dans une même position de fréquence intermédiaire.

3. Procédé selon la revendication 1,
caractérisé en ce que
la transposition numérique des signaux modulés transmis numériquement en accès à partage du temps, a lieu respectivement de façon fermée dans différentes zones de fréquence, la transposition étant réalisée de telle façon que les fractions de signaux utiles ne se recouvrent pas en fréquence, et que les signaux ainsi transposés soient réunis par addition numérique en un signal multiplex de fréquence.

4. Procédé selon la revendication 3,
caractérisé en ce que
le signal multiplex de fréquence est alimenté dans un système de transmission et/ou de répartition.

5. Procédé selon la revendication 3 ou 4,
caractérisé en ce que
le signal multiplex de fréquence est reconverti, après la transmission et/ou la répartition, avec seulement un convertisseur numérique/analogique.

6. Procédé selon l'une des revendications 1 à 5,
caractérisé en ce que
les signaux modulés numériquement sont logés dans une trame de partage dans le temps, avec par exemple 139,264 Mbit/s de la hiérarchie numérique plésiochrone.

7. Procédé selon l'une des revendications 1 à 5,
caractérisé en ce que
les signaux modulés numériquement sont logés respectivement dans une trame, par exemple la trame STM1, de la hiérarchie numérique synchrone.

8. Procédé selon la revendication 2,
caractérisé en ce que
après la transposition numérique d'un signal d'image transmis, on exécute une conversion numérique/analogique, afin que le signal d'image soit approprié pour être alimenté dans un réseau analogique de transmission et/ou de répartition.

9. Application du procédé selon l'une des revendications 1 à 8,
pour la transmission de signaux dans un dispositif d'amenée de télévision par câble et/ou un réseau de distribution de télévision par câble.
